# EUROPEAN PATENT SPECIFICATION

(11) **EP 2 552 838 B1**
(45) Date of publication and mention of the grant of the patent: **19.07.2017**
(21) Application number: 11728764.9
(22) Date of filing: 18.03.2011
(51) Int. Cl.: C02F 3/12, C02F 3/22

(54) **METHOD OF WASTEWATER TREATMENT AND APPARATUS FOR ITS REALIZATION IN SEQUENCING BATCH REACTORS**
VERFAHREN ZUR ABWASSERBEHANDLUNG UND VORRICHTUNG ZU DESSEN DURCHFÜHRUNG IN SEQUENCING-BATCH-REAKTOREN
PROCÉDÉ DE TRAITEMENT DES EAUX USÉES ET APPAREIL PERMETTANT DE LE RÉALISER DANS DES RÉACTEURS BIOLOGIQUES SÉQUENTIELS

(30) Priority: 29.03.2010 CZ 20100231
(43) Date of publication of application: 06.02.2013
(73) Proprietor: Topol, Jan, Prague 8 180 00 (CZ)
(72) Inventor: Topol, Jan, Prague 8 180 00 (CZ)
(74) Representative: Sloboshanin, Sergej
(86) International application number: PCT/CZ2011/000022
(87) International publication number: WO 2011/120476

(56) References cited:
- DE-A1- 2 845 312
- DE-U1-202007 016 942

## Description

### Technical field

The invention concerns the wastewater treatment in discontinuous flow reactors, i.e. in SBR (Sequencing Batch Reactor). Thus, it concerns the process of biological wastewater treatment using suspension of activated sludge mainly in small scale and domestic wastewater treatment plants.

### Background art

The wastewater treatment in SBRs is characteristic by having divided the treatment process in several phases. During the first phase of filling, the water in the reactor rises from the lower to the upper level. The main treatment processes associated with aeration and mixing of wastewater with the activated sludge, consisting of the mixture of various microorganisms are performed after the reactor is filled to the upper level, that means to the operating level. The treatment processes can be started also during filling of the reactor. After the time needed for treatment of wastewater the sedimentation phase follows in which the activated sludge that is heavier than water settles in the lower part of the tank. After sufficiently long time, which is depending on the sludge quality, its sedimentation rate and geometry and size of the tank, the treated water decanting phase takes place, when the liquor level falls from the operational to the lower level.

In order to prevent the influent wastewater from interfering with the sludge sedimentation, or from being pumped to the outlet without treatment, these wastewater treatment plants are equipped with an equalizing tank at the inflow, where the wastewater is accumulated during the process of sludge sedimentation and decanting of the treated water. Another alternative is a wastewater treatment plant with multiple SBRs, which alternate in their phases, so that there is always SBR able to accept the influent wastewater. Another alternative is a wastewater treatment plant consisting of one SBR, into which the wastewater flows continuously. In such case wastewater is directed to the bottom of the reactor, tanks must be deep enough and the inlet to the tank is situated on the opposite side of the tank than the outflow of the treated water. These measures eliminate danger of mixing raw and treated water at the outflow from the wastewater treatment plant. In this case, the reactor can be filled during the sedimentation phase higher than the upper level is set and the reactor decanting phase can extend by decanting the amount of wastewater which flowed in during the reactor decanting phase.

It is evident from the above facts that the main treatment process does not run during the time of sludge sedimentation and reactor decanting. Therefore, it is advantageous for the entire plant performance to reduce these times to minimum. This is achieved by a high-performing decanting system and by collecting the treated water near under the water level, where it is not polluted by particles of settling sludge.

In smaller SBRs it is advantageous to use an air-lift pump for decanting of treated water. With regard to the fact that pressure air is in most cases available at the wastewater treatment plant, this solution is cost-effective and more advantageous in terms of design and construction than using e.g. electric pumps. However, a problem of water pumping-off by the air-lift pump is in its small hydraulic delivery at small submersion in the liquid to be pumped off. Currently the air-lift pumps are located directly in the pumped-off water. As due to the required hydraulic delivery of the air-lift pump, the inlet to the air-lift pump must be sufficiently deep under the water surface level in the reactor, a big time lag occurs in the sedimentation phase, until the interface of the settled sludge and treated water falls deep enough below the inlet to the air-lift pump in order to prevent sludge intake during the treated water draw off.

Another option is such a design of the air-lift pump, where pressure air enters it only near the bottom, which produces sufficient pressure for the air-lift pump operation. The treated water is conveyed to the air-lift pump via an inlet located at the level above the estimated layer of sludge after sedimentation. Although this solution ensures an adequate delivery of the air-lift pump, it requires a long-lasting sedimentation until the sludge layer settles safely deep below the inlet of the air-lift pump. Another marked disadvantage of this solution is the fact of sludge entering into the inlet to the air-lift pump during the activation process, when the activated sludge is mixed with the wastewater, which results in a worsened quality of the outflowing treated water.

DE 20 2007 016942 U1 describes a wastewater treatment plant with a reactor which directly receives an air-lift pump consisting of a first vertical pipe which is connected in its lower part with a second longer vertical pipe. A pressure is directed to the lower part of the second vertical pipe. Treated water flows through the first vertical pipe and water is drawn out of the plant through the second pipe. The inflow of the first pipe has to be placed at sufficient height above the level of the sedimented sludge.

### Disclosure of invention

The above-mentioned drawbacks are eliminated by a method of wastewater treatment and an apparatus for its realization in sequencing batch reactors according to independent claims 1 and 3. Wastewater in the reactor of a wastewater treatment plant is exposed to the activated sludge and subsequently in the sedimentation phase the activated sludge is separated from the treated water by settling near the bottom of the reactor and the treated water is decanted from the wastewater treatment plant. The basis of the invention consists of the fact that the sub-surface layer of the treated water is decanted from the wastewater treatment plant by a decanting apparatus into a separate tank of the air-lift pump, which is separated in a watertight way from the inside of the reactor. From separate tank of the air-lift pump the treated water is pumped into an outlet by the air-lift pump which has the inlet situated in the submersion depth corresponding to the required hydraulic delivery yield of that pump. The submerged inlet end of the decanting apparatus moves vertically alongside with the changing water level in the reactor.

Before the treated water is decanted from the reactor, the water level in the separate tank with the air-lift pump is risen to a level higher than the water level in the reactor.

During the treated water decanting from the reactor, the water level in the separate tank with the air-lift pump is maintained lower than the water level in the reactor, at least by the decanting apparatus overflow height above the water level in the reactor.

Water from the sub-surface layer is drawn into the separate tank with the air-lift pump over the overflow of the decanting apparatus by reducing the water level in the air-lift pump tank. Hydraulic delivery of the air-lift pump is reduced by hydraulic losses resulting from the water flowing through the decanting apparatus. These hydraulic losses in aggregate will show as a head loss, which is a difference between the water level in the reactor and the water level in the tank of air-lift pump. The head loss is a sum of the overflow height in the decanting apparatus above the water level in the reactor and the head loss by the water flow through the decanting apparatus. It applies that head loss due to the flow increase with the increasing flow (1/sec, 1/min) and decreasing diameter of the pipes of the decanting apparatus. If the head loss reaches the height equal to the submerge depth of the flexible connection of the decanting apparatus to the
air-lift pump tank, i.e. the water level in the air-lift pump tank falls below this connection, the decanting apparatus will be filled with air and discontinues its operation.

The wastewater treatment plant with a sequencing batch reactor according to the invention consists of a tank of the reactor with the inlet of wastewater, an aerator and an air-lift pump for the pumping off of the treated water. The air-lift pump is located in a separate tank, separated in a watertight way from the inside of the reactor. The pumped off water is drawn off from the reactor to the separate tank of the air-lift pump by the decanting apparatus, consisting of an inlet pipe in the upper inflow part, equipped with a float component, an overflow and an inlet pipe. The lower end of the inlet pipe is flexibly connected with the separate tank. The overflow is kept by the float component above the water level in the reactor. The inlet opening of the inlet pipe is submerged below the water level in the reactor in order to avoid pollution by floating impurities during the decanting of the treated water. As it applies for the air-lift pump that the more it is submerged, the higher its delivery yield, the location of the inlet opening is usually chosen to be in the lower section of its tank, no matter whether this tank is located inside or outside the reactor. The depth of the air-lift pump inlet is selected according to the required delivery yield of the air-lift pump.

Advantages of the solution based on the invention consist primarily in the fact that when operating the wastewater treatment plant the idle time, i.e. the time of the sludge sedimentation and the treated water decanting from the plant, when the main wastewater treatment itself is not performed, is significandy shortened. Speed of the treated water decanting can be set as needed by setting the depth of the air-lift pump inlet. Also, danger of sludge entry in the outflowing water is minimized. With regard to the fact that a pressure air source is a necessary component of most SBR, the use of the air-lift pump for securing the required yield is in comparison with other methods of pumping-off easy in terms of design and highly cost-effective. Decanting the treated water from the sub-surface layer will prevent its pollution by floating impurities.

### General description of Drawings

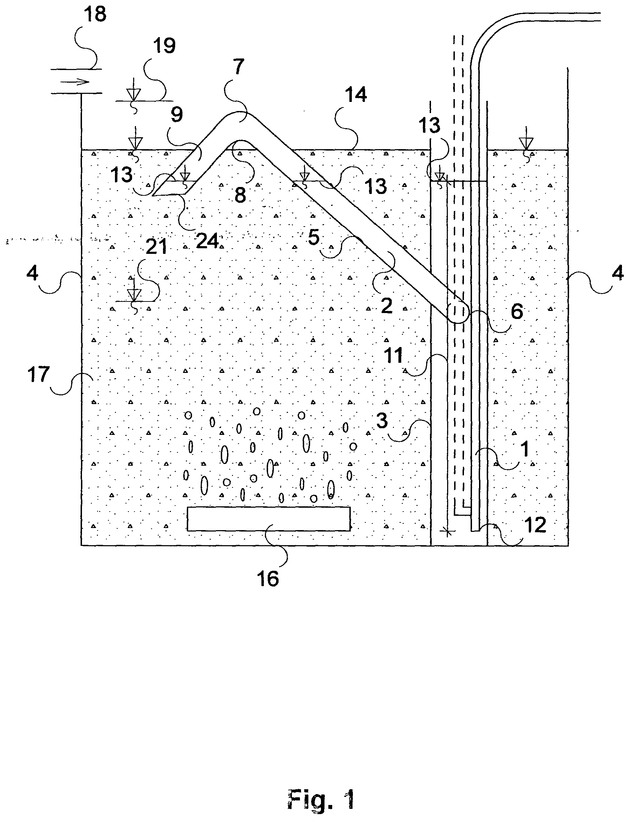

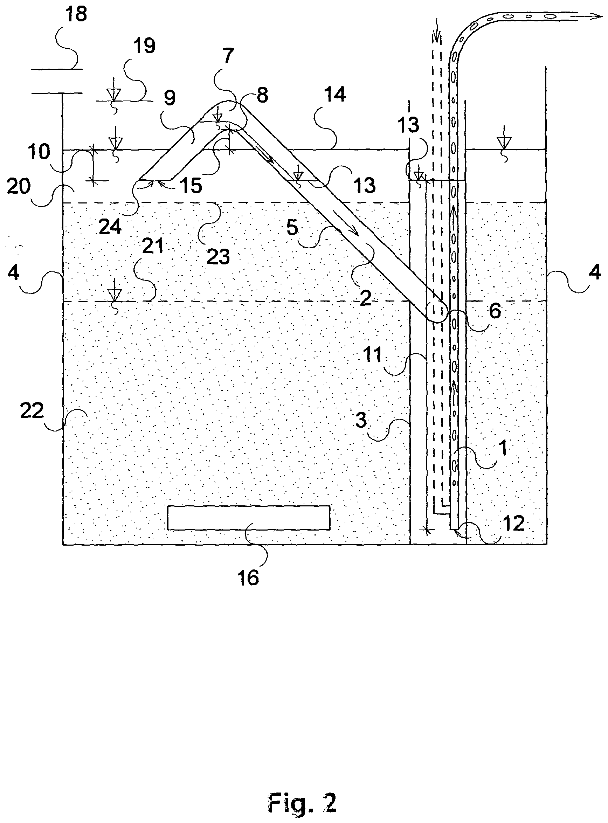

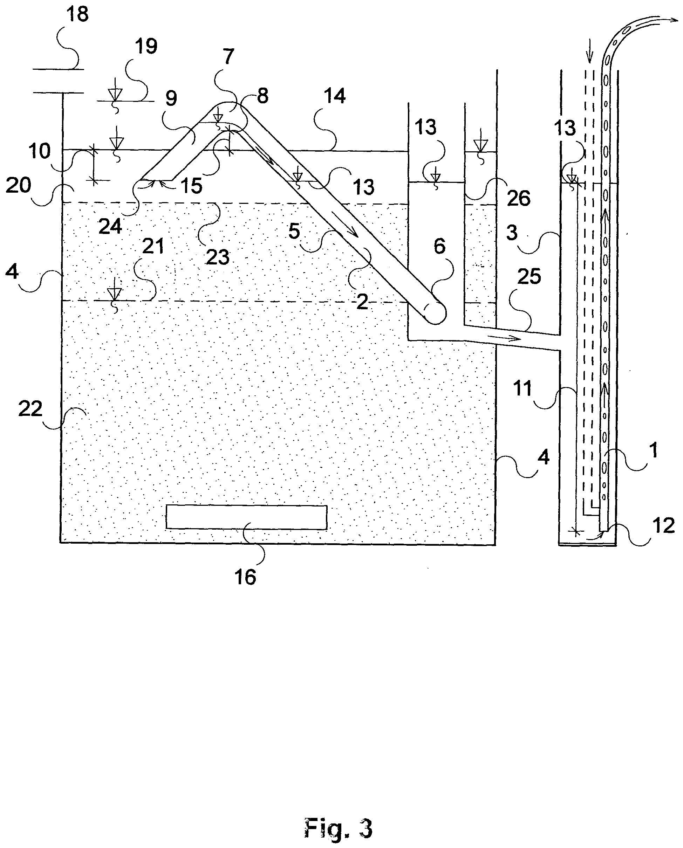

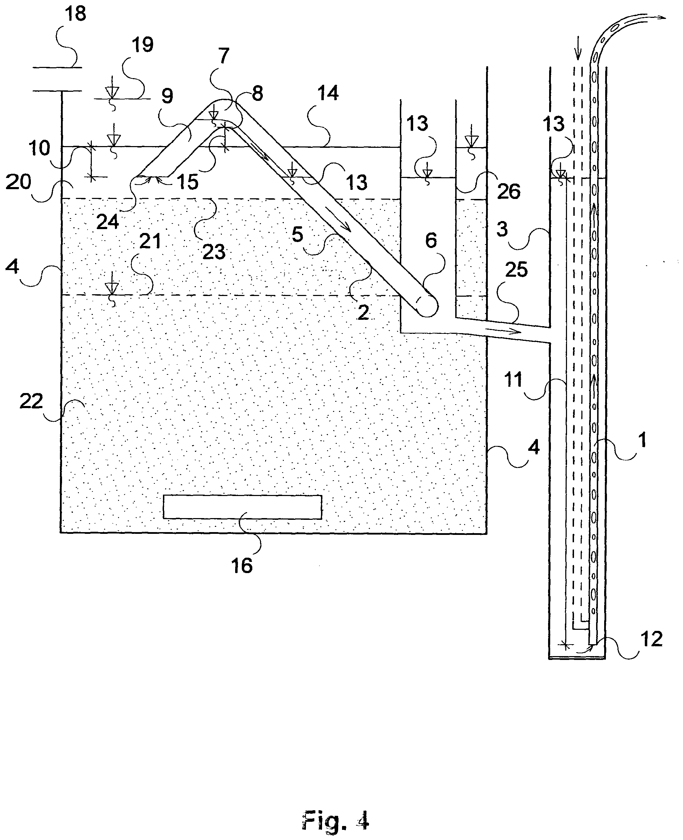

Fig. 1 and 2 represent one of the versions of the wastewater treatment plant with the air-lift pump located inside the reactor, where Fig. 1 shows the status with a switched-off air-lift pump and Fig. 2 an air-lift pump in operation. Fig. 3 and 4 show examples of the wastewater treatment plant with the air-lift pump located outside the reactor of the wastewater treatment plant.

### Description of preferred Embodiment

Based on the invention, the wastewater treatment plant consists of the reactor **4** with a gravitational or pressure inlet **18** of wastewater and the aerator **16.** In one of the possible versions shown in Fig. 1 and 2 the reactor **4** houses a decanting apparatus **2** consisting of an inlet pipe **9** with.an inlet opening **24**, a float component **7** and also a transport pipe **5** entering the tank **3** of the air-lift pump **1** via flexible connection **6**. The float component **7** can comprise for instance a pipe bend or an aired part of another shape. The flexible connection **6** can consist of a turning bend, a flexible pipe made of a soft material, etc. The tank **3** of the air-lift pump **1** is separated from the inside of the reactor **4** in a watertight way. The air-lift pump **1** has its inlet **12** advantageously located near the bottom of the tank **3**. For the air-lift pump **1** to operate reliably its inlet **12** should not be placed above the minimum water level **21** in the reactor **4** reduced by half of the difference between the upper and lower water level **19**. **21** in the reactor **4.**
Fig. 3 and 4 show the tank **3** of the air-lift pump **1** placed outside the reactor **4**. Whereas Fig. 3 shows the tank **3** of the air-lift pump **1** placed at the same level with the reactor **4** Fig. 4 shows the inlet **12** to the air-lift pump **1** located below the level of the bottom of the reactor **4**. This further increases the delivery yield of the air-lift pump **1** if needed. In this case the decanting apparatus **2** enters the treated water tank **26**. located in the reactor **4**. The treated water tank **26** is connected via the connecting pipe **25** with the tank **3** of the air-lift pump **1** placed outside the reactor **4**.

The described technical solution is one of the alternatives which require incorporation of an equalizing tank, not shown in the figures, prior to the reactor **4**. Wastewater is accumulated in this tank and during the sedimentation phase and the phase of emptying the reactor **4** it does not enter the reactor **4.** Nevertheless, the same utilisation of the solution according to the invention is also possible in other versions of wastewater treatment plant arrangement, for example with a pair of reactors, or with a reactor structurally adapted for continuous inflow of the wastewater.

During the filling phase, which is shown in Fig. 1, the tank of the reactor **4** is entered by wastewater via the inlet **18** up to the upper water level **19.** During the filling phase the reactor **4** is usually aerated, which is associated with mixing the wastewater with the activated sludge, which treats the wastewater. It is also useful to bring a little amount of air into the decanting apparatus **2** so that during the entire filling phase the inlet pipe **9** is aired and no sludge settles on its walls. After the reactor is filled, either the sedimentation phase follows, or, if necessary and with respect to the type and degree of pollution, another activation takes place at the full reactor **4**. During the time when the non-separated mixture **17** of the wastewater and the sludge is stirred in the reactor **4,** the air-lift pump **1** is always switched off. At this phase air in the submerged inlet pipe **9** prevents an intake of both impurities floating on the surface and the mixture of sludge and water to the air-lift pump **1**.

The state of the wastewater treatment plant during the treated water decanting after the necessary time of sedimentation is shown in Fig. 2. This sedimentation time, depending on the sludge characteristics, usually takes from 10 to 70 minutes, until a sufficient layer of the treated water is created above the interface **23** of the treated water and the sludge, which thus drops deep enough below the inlet opening **24** of the inlet pipe **9.** During the sedimentation phase the lower zone **22** of the settling sludge diminishes and the upper zone **20** of the treated water enlarges. Before the air-lift pump **1** is switched on, the tank **3** of the air-lift pump **1** fills with the clear water from the non-depicted accumulation tank of clear water, at least to the water level **14** in the reactor **4**. Therefore also the transport pipe **5** fills in to the corresponding water level. After the air-lift pump **1** starts pumping off the treated water from the tank **3** of the air-lift pump **1** and the treated, sub-surface water from the reactor **4** is drawn into the inlet pipe **9** from the depth **10** of its submerged inlet opening **24**. The treated water is drawn over the overflow **8** by a transport pipe **5** to the tank **3** of the air-lift pump **1** and via the inlet **12** of the air-lift pump **1** out of the wastewater treatment plant. During this pumping off, the water level **13** in the tank **3** of the air-lift pump **1** must be kept lower than the current water level **14** in the reactor **4,** at least by the height **15** of the overflow **8** above the water level **14** in the reactor **4**. To secure flawless pumping off and sufficient overpressure at the inlet **12** of the air-lift pump **1** it is necessary the submersion **11** of the inlet **12** is deep enough. The specific depth of submersion of the inlet **12** thus depends on the design and size of the wastewater treatment plant and on requirements placed on the speed of the treated water decanting from the wastewater treatment plant. During the decanting of treated water the aired float component **7** together with the inlet pipe **9** copies the fluctuation of the water level **14** in the reactor **4,** falling alongside during the entire time of decanting. This status lasts throughout the emptying period of the reactor **4** from the upper water level **19** to the lower water level **21**. After reaching this water level **21** the air-lift pump **1** is switched off. It must be secured at the same time that the lower level **21** will not fall below the connection of the decanting apparatus **2** to the tank **3.** The aforementioned facts clearly show that this connection of the decanting apparatus **2** must be constantly submerged below the water level **14** in the reactor **4**. During the treated water decanting the aired space of the float component **7** and the aired space in the transport pipe **5** above the operating water level **13** function as a float and keep the inlet opening **24** in a constantly submerged position against the current water level **14** in the reactor **4.** The treated water from the sub-surface zone **20.** in the reactor **4** is usually decanted from the depth of 50 to 300 mm. This secures prevention of intake of floating impurities to the outlet and also the treated water from the purest, sub-surface zone is decanted from the wastewater treatment plant.

## Claims

1. A method of wastewater treatment with suspended activated sludge in a sequencing batch reactor (4), wherein the wastewater in the reactor (4) of a wastewater treatment plant is treated by the activated sludge and subsequently, during the sedimentation phase the activated sludge is separated from the treated water by settling at a bottom of the reactor (4) and the treated water is decanted from the wastewater treatment plant,
**characterized in that**
the treated water is drawn by a decanting apparatus (2) from a sub-surface water layer in the reactor (4) to a separate tank (3) of an air-lift pump (1), the tank (3) being separated in a watertight way from the inside of the reactor (4), whereby the treated water is pumped off from the separate tank (3) to the outlet of the reactor (4) by the air-lift pump (1), an inlet (12) of which being located at a depth corresponding to a required delivery yield of the air-lift pump (1), whereas a submerged inlet part of the decanting apparatus (2) moves vertically alongside with a changing water level (14) in the reactor (4).

2. The method of wastewater treatment according to claim 1, **characterized in that** the water level (13) in the separate tank (3) with the air-lift pump (1) is increased to a level higher than the water level (14) in the reactor (4) prior to the decanting of the treated water from the reactor (4).

3. A wastewater treatment plant with a sequencing batch reactor, consisting of a tank of reactor (4) with an inflow of wastewater, an aerator (16) and an air-lift pump (1) for pumping off the treated water,
**characterized in that**
the air-lift pump (1) is located in a tank (3), separated in a watertight way from the inside of the reactor (4);
the wastewater treatment plant comprises a decanting apparatus (2) arranged to draw treated water from a sub-surface water layer in the reactor (4) to the separate tank (3) of the air-lift pump (1), wherein the decanting apparatus (2) comprises an inlet pipe (9), a float component (7) and a transport pipe (5), wherein the transport pipe (5) enters the tank (3) via a flexible connection (6), and wherein an upper part of the transport pipe (5) is equipped with the float component with an overflow (8) of the treated water which is kept above the water level (14) of the reactor (4), whereas the float component (7) is ended by the inlet pipe (9), an inlet opening (24) of which is submerged below the water level (14) in the reactor (4).

4. The wastewater treatment plant with sequencing batch reactor according to claim 3, **characterized in that** the tank (3) of the air-lift pump (1) is located in the reactor (4).

5. The wastewater treatment plant with sequencing batch reactor according to claim 3, **characterized in that** the tank (3) with the air-lift pump (1) is located outside the reactor (4).

## Patentansprüche

1. Verfahren zur Abwasserbehandlung mit suspendiertem Belebtschlamm in einem Sequencing-Batch-Reaktor (4), wobei das Abwasser in dem Reaktor (4) einer Abwasserbehandlungsanlage durch den Belebtschlamm behandelt wird, und anschließend, während der Sedimentationsphase der Belebtschlamm von dem behandelten Wasser durch Absetzen an einem Boden des Reaktors (4) getrennt wird und das behandelte Wasser von der Abwasserbehandlungsanlage dekantiert wird,
**dadurch gekennzeichnet, dass**
das behandelte Wasser durch eine Dekantiervorrichtung (2) aus einer unter der Oberfläche befindlichen Wasserschicht in dem Reaktor (4) zu einem separaten Tank (3) einer Druckluftpumpe (1) gezogen wird, wobei der Tank (3) auf wasserdichte Weise vom Inneren des Reaktors (4) getrennt ist, wobei das behandelte Wasser aus dem separaten Tank (3) zum Auslass des Reaktors (4) durch die Druckluftpumpe (1) abgepumpt wird, deren einer Einlass (12) in einer Tiefe angeordnet ist, die einem erforderlichen Förderertrag der Druckluftpumpe (1) entspricht, wobei ein untergetauchter Einlassteil der Dekantiervorrichtung (2) sich mit einem sich ändernden Wasserpegel (14) in dem Reaktor (4) vertikal längsseits bewegt.

2. Verfahren zur Abwasserbehandlung nach Anspruch 1, **dadurch gekennzeichnet, dass** der Wasserpegel (13) in dem separaten Tank (3) mit der Druckluftpumpe (1) auf einen Pegel erhöht wird, der höher ist als der Wasserpegel (14) in dem Reaktor (4) vor dem Dekantieren des behandelten Wassers aus dem Reaktor (4).

3. Abwasserbehandlungsanlage mit einem Sequencing-Batch-Reaktor (4), der aus einem Tank des Reaktors (4) mit einem Zufluss von Abwasser, einem Belüfter (16) und einer Druckluftpumpe (1) zum Abpumpen des behandelten Wassers besteht,
**dadurch gekennzeichnet, dass**
die Druckluftpumpe (1) in einem Tank (3) angeordnet ist, der auf wasserdichte Weise vom Inneren des Reaktors (4) getrennt ist;
die Abwasserbehandlungsvorrichtung eine Dekantiervorrichtung (2) aufweist, die dazu angeordnet ist, behandeltes Wasser aus einer unter der Oberfläche befindlichen Wasserschicht in dem Reaktor (4) zu dem separaten Tank (3) der Druckluftpumpe (1) zu ziehen, wobei die Dekantiervorrichtung (2) ein Einlassrohr (9), eine Schwimmerkomponente (7) und ein Transportrohr (5) aufweist, wobei das Transportrohr (5) in den Tank (3) über eine flexible Verbindung (6) eintritt, und wobei ein oberer Teil des Transportrohrs (5) mit der Schwimmerkomponente mit einem Überlauf (8) des behandelten Wassers ausgestattet ist, der über dem Wasserpegel (14) des Reaktors (4) gehalten ist, wobei die Schwimmerkomponente (7) mit dem Einlassrohr (9) endet, von dem eine Einlassöffnung (24) unter dem Wasserpegel (14) in dem Reaktor (4) untergetaucht ist.

4. Abwasserbehandlungsanlage mit Sequencing-Batch-Reaktor nach Anspruch 3, **dadurch gekennzeichnet, dass** der Tank (3) der Druckluftpumpe (1) in dem Reaktor (4) angeordnet ist.

5. Abwasserbehandlungsanlage mit Sequencing-Batch-Reaktor nach Anspruch 3, **dadurch gekennzeichnet, dass** der Tank (3) mit der Druckluftpumpe (1) außerhalb des Reaktors (4) angeordnet ist.

## Revendications

1. Procédé de traitement d'eaux usées avec des boues activées en suspension dans un réacteur séquentiel discontinu (4), dans lequel les eaux usées présentes dans le réacteur (4) d'une usine de traitement d'eaux usées sont traitées grâce aux boues activées et ensuite, pendant la phase de sédimentation, les boues activées sont séparées de l'eau traitée en se déposant au niveau d'un fond du réacteur (4) et l'eau traitée est décantée lorsqu'elle part de l'usine de traitement d'eaux usées,
**caractérisé en ce que**
l'eau traitée est aspirée grâce à un appareil de décantation (2) à partir d'une couche d'eau située sous la surface au sein du réacteur (4) vers un réservoir séparé (3) d'une pompe à injection d'air (1), le réservoir (3) étant séparé de l'intérieur du réacteur (4) de manière étanche à l'eau, grâce à quoi l'eau traitée est pompée à partir du réservoir séparé (3) vers la sortie du réacteur (4) grâce à la pompe à injection d'air (1), dont une entrée (12) est située à une profondeur correspondant à un débit de fourniture requis de la pompe à injection d'air (1), une partie entrée immergée de l'appareil de décantation (2) se déplaçant verticalement en même temps qu'un niveau d'eau (14) variable au sein du réacteur (4).

2. Procédé de traitement d'eaux usées selon la revendication 1, **caractérisé en ce que** le niveau d'eau (13) au sein du réservoir séparé (3) muni de la pompe à injection d'air (1) est augmenté jusqu'à dépasser le niveau d'eau (14) au sein du réacteur (4) préalablement à la décantation de l'eau traitée en provenance du réacteur (4).

3. Usine de traitement d'eaux usées avec un réacteur séquentiel discontinu, constitué d'un réservoir de réacteur (4) avec une arrivée d'eaux usées, un aérateur (16) et une pompe à injection d'air (1) permettant de pomper l'eau traitée,
**caractérisée en ce que**
la pompe à injection d'air (1) est située dans un réservoir (3), qui est séparé de l'intérieur du réacteur (4) de manière étanche à l'eau ;
l'usine de traitement d'eaux usées comprend un appareil de décantation (2) agencé pour aspirer l'eau traitée à partir d'une couche d'eau située sous la surface au sein du réacteur (4) vers le réservoir séparé (3) de la pompe à injection d'air (1), dans laquelle l'appareil de décantation (2) comprend une conduite d'entrée (9), un composant formant flotteur (7) et une conduite de transport (5), dans laquelle la conduite de transport (5) pénètre dans le réservoir (3) par l'intermédiaire d'un raccord flexible (6), et dans laquelle une partie supérieure de la conduite de transport (5) est munie du composant formant flotteur en conservant un trop-plein (8) de l'eau traitée qui est maintenu au-dessus du niveau d'eau (14) du réacteur (4), le composant formant flotteur (7) s'achevant par la conduite d'entrée (9), dont une ouverture d'entrée (24) est immergée en dessous du niveau d'eau (14) au sein du réacteur (4).

4. Usine de traitement d'eaux usées avec réacteur séquentiel discontinu selon la revendication 3, **caractérisée en ce que** le réservoir (3) de la pompe à injection d'air (1) est situé dans le réacteur (4).

5. Usine de traitement d'eaux usées avec réacteur séquentiel discontinu selon la revendication 3, **caractérisée en ce que** le réservoir (3) muni de la pompe à injection d'air (1) est situé à l'extérieur du réacteur (4).
